# EUROPEAN PATENT APPLICATION

(11) **EP 4 840 637 A1**
(43) Date of publication of application: **18.11.2026**
(21) Application number: 25175849.6
(22) Date of filing: 12.05.2025
(51) Int. Cl.: B41J 2/045, B41J 2/165

(54) **A METHOD OF MONITORING A CLEANING PROCESS IN AN INK JET PRINTER**

(71) Applicant: CANON KABUSHIKI KAISHA, Tokyo 146-8501 (JP)
(72) Inventor: WEEBER, Luc B.M., Venlo (NL)
(74) Representative: Canon Production Printing IP Department

(57) **Abstract**

A method of monitoring a cleaning process in an ink jet printer having a nozzle face (12) with a number of nozzles (14) formed therein, each nozzle being associated with an acousto-electric transducer arranged to generate an acoustic pressure wave in a liquid ink for expelling an ink droplet from the nozzle (14), the cleaning process comprising wiping the nozzle face (12) with a wiper (26, 28) that is impregnated with a cleaning liquid (36), characterized by a step of using the acousto-electric transducer as a sensor for detecting the presence of cleaning liquid (36) in the nozzles (14).

## Description

### BACKGROUND OF THE INVENTION

### Field of the invention

The invention relates to a method of monitoring a cleaning process in an ink jet printer having a nozzle face with a number of nozzles formed therein, each nozzle being associated with an acousto-electric transducer arranged to generate an acoustic pressure wave in a liquid ink for expelling an ink droplet from the nozzle, the cleaning process comprising wiping the nozzle face with a wiper that is impregnated with a cleaning liquid.

The invention further relates to an ink jet printer that is suitable for carrying out this method.

### Description of Background Art

In an ink jet printer, nozzle orifices from which the ink is jetted out are formed in a flat print head surface that is designated as "nozzle face". In order to prevent the nozzle face from being wetted with liquid ink, the nozzle face typically has an anti-wetting coating. Nevertheless, in the course of use of the printer, dust and other contaminants such as minute ink droplets from a mist of ink that is created in the print process may contaminate the nozzle face, so that it is necessary to clean the nozzle face from time to time. When the nozzle face is cleaned mechanically by means of the wiper member, there is a risk that the anti-wetting coating is damaged or removed due to wear, in particular in the presence of pigments from the ink. It has been found that the wear can be reduced by wiping the nozzle face with a wetted tissue.

In a known cleaning process, the wiper that is used for wiping the nozzle face is a toothed roller arranged to slightly press the wetted tissue against the nozzle face. The tissue takes the form of an endless web that is continuously passed over the roller after it has been wetted with the cleaning liquid by means of a wetting roller. The teeth of the wiper roller effect a local compression of the tissue, so that a part of the cleaning liquid is squeezed out of the compressed areas and is absorbed in the non-compressed tissue in the gaps between the teeth. These non-compressed areas of the tissue become almost saturated with a liquid, which reduces the risk that ink from the nozzles of the print head is absorbed in the tissue due to capillary action and may then lead to wear at the nozzle face.

In order for the nozzle face to be cleaned thoroughly while avoiding an excessive abrasion of the nozzle face, certain parameters of the cleaning process must be adjusted properly. Examples of these parameters comprise the pressure with which the wiper roller is urged against the nozzle face, the amount of cleaning liquid applied to the tissue, the transport speed with which the web is fed to the wiper member, and an underpressure that is applied to the ink in the print head in order to prevent the ink and the abrasive pigment particles contained therein from being absorbed into the tissue.

### SUMMARY OF THE INVENTION

It is an object of the invention to provide a method for checking whether parameters of the cleaning process have been set properly.

In order to achieve this object, the method according to the invention is characterized by a step of using the acousto-electric transducer as a sensor for detecting the presence of cleaning liquid in the nozzles.

If the parameters of the cleaning process have been set correctly, then, when the wiper and the tissue are moved over the nozzle face, a certain amount of cleaning liquid will be squeezed out of the tissue and will enter into the nozzles, thus displacing a corresponding amount of liquid ink that had been contained in the nozzles. When the wiping process for an individual nozzle has been completed, a certain amount of cleaning liquid will remain in the nozzle. Thus, by checking whether a sufficient amount of cleaning liquid has remained in the nozzle, it can be confirmed that the cleaning process has been conducted properly.

It has generally been known that the acousto-electric transducers of a printhead can be used for monitoring a condition of the nozzles, e.g. a state of clogging of the nozzles. Typically, the transducer is a piezoelectric strip that is subject to a bending-type deformation when a voltage is applied thereto. In this way, an acoustic pressure wave can be generated in the ink in a pressure chamber that is connected to the nozzle and is affected by the deformation of the transducer. An ink droplet will be expelled from the nozzle if the acoustic pressure wave is strong enough. In any case, however, the acoustic pressure wave that has been generated in the pressure chamber will gradually decay and will cause deformations of the transducer. These deformations of the piezoelectric material will change the electric impedance of the transducer. Thus, the behavior of the decaying pressure wave can be monitored by detecting the impedance changes of the transducer.

In EP 3 372 410 A1, it has already been suggested to utilize this effect for monitoring the cleaning process. According to this proposal, the behavior of the pressure wave is monitored while the wiper is partly or completely obstructing the nozzle orifice. Then, it can be concluded from the decay behavior of the pressure wave whether or not the wiper is positioned correctly relative to the nozzle face.

In contrast, the present invention takes advantage of the fact that the viscosity and density, and hence the acoustic properties, of the cleaning liquid are different from the properties of the ink so that any changes in the proportion between the amounts of cleaning liquid and ink in the nozzle are reflected by corresponding changes in the decay behavior of the pressure wave. Thus, it is possible for example to record a number of decay curves of the pressure waves for different settings, including proper and improper settings, of the parameters of the cleaning process. Then, when a cleaning process is monitored, the detected decay behavior can be compared to the recorded decay curves in order to decide whether or not the setting of the parameters was correct.

More specific optional features of the invention have been indicated in the dependent claims.

### BRIEF DESCRIPTION OF THE DRAWINGS

An embodiment example with now the described in conjunction with the drawings, wherein:
- Fig. 1: is a schematic view of a number of ink jet print heads and a cleaning unit in an ink jet printer;
- Fig. 2: is an enlarged sectional view of a nozzle in a nozzle face of a print head, and an associated transducer;
- Fig. 3: shows a web of tissue trained over a wiper member for wiping the nozzle face, as well as a sectional view of a number of nozzles; and
- Fig. 4: is a flow diagram of a process for recording decay curves to be compared with measurement results in the method according to the invention.

### DETAILED DESCRIPTION

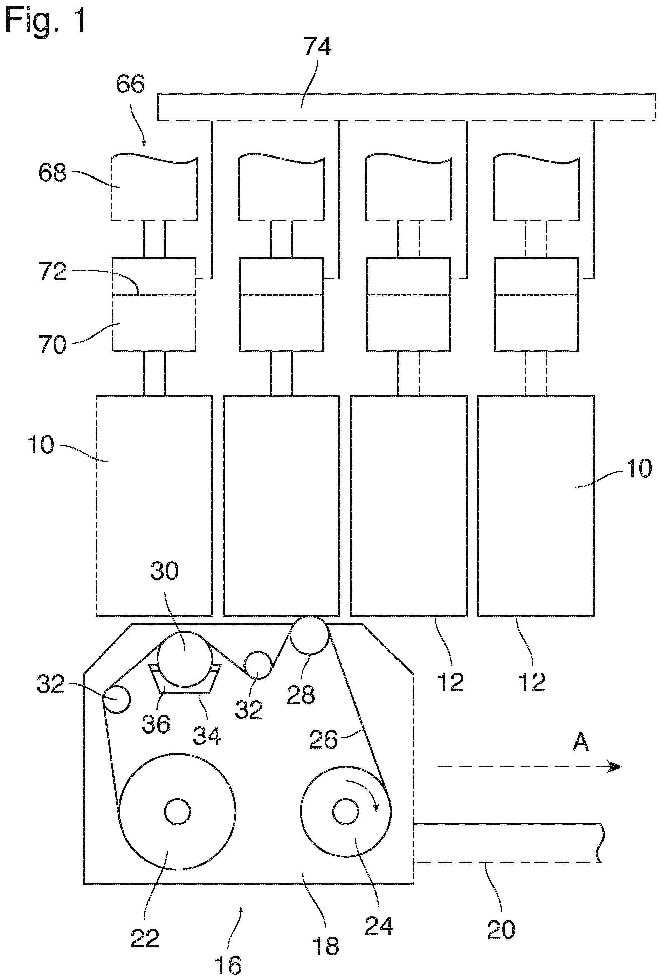

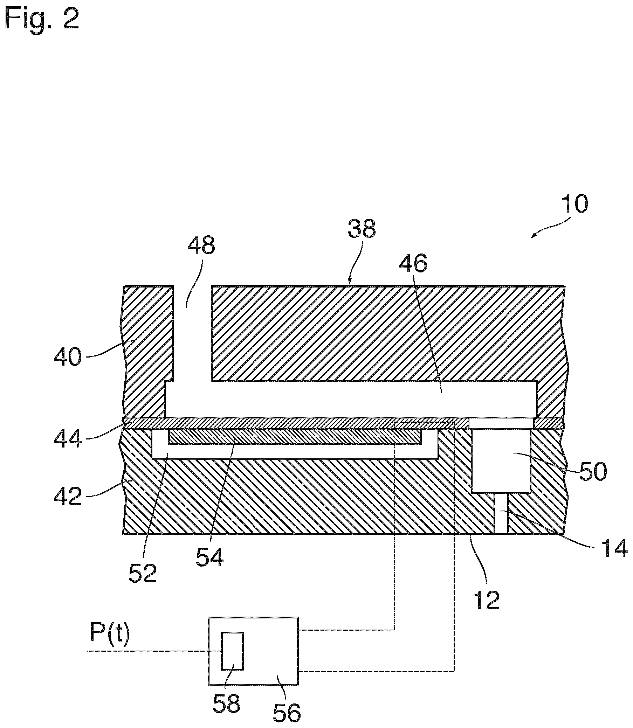

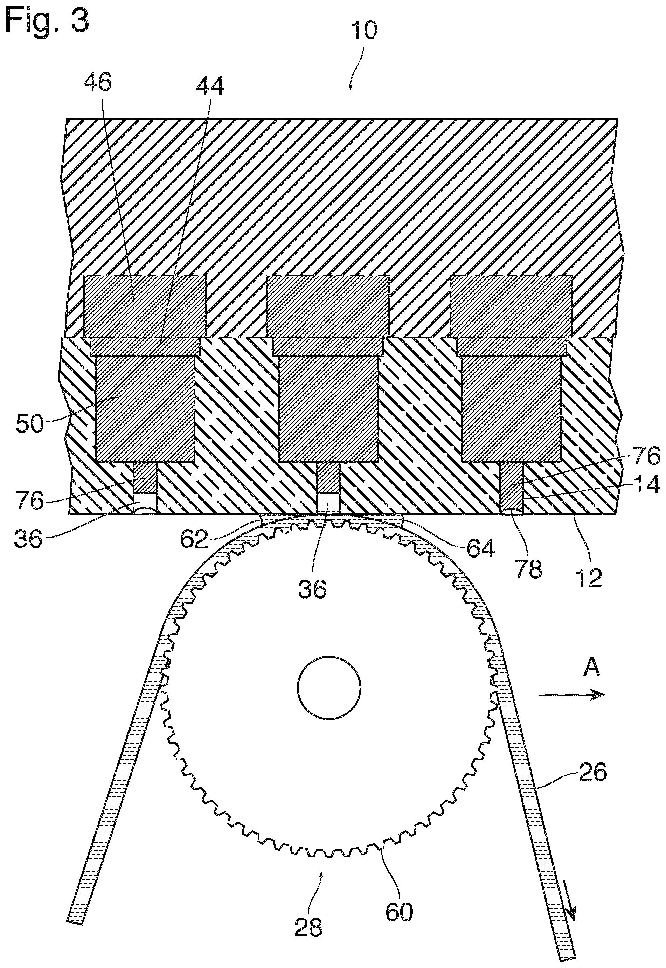

As is shown in Fig. 1, an ink jet printer has a number of print heads 10. Each print head 10 has a nozzle face 12 that includes an array of nozzles 14 (Figs. 2 and 3) for jetting out liquid ink onto a recording medium (not shown in Fig. 1) while the printheads 10 scan the recording medium.

In the situation shown in Fig. 1, the print heads 10 have been moved to a cleaning station where a cleaning unit 16 is provided for cleaning the nozzle faces 12 of the print heads 10. The print heads 10 are arranged such that their nozzle faces 12 lie in a common plane. The cleaning unit 16 comprises a frame 18 that is movable along a guide rail 20 in a direction A parallel to the plane that is defined by the nozzle faces 12.

A supply coil 22 and a take-up coil 24 for a web of tissue 26 are rotatably supported on the frame 18 which also rotatably supports a roller-shaped wiper member 28, a wetting roller 30, and a number of deflection rollers 32 for guiding the web of tissue 26 over the wetting roller 30 and then over the wiper member 28.

The wiper member 28 is arranged such that its top vertex is located in the plane that is defined by the nozzle faces 12 so that the wiper member wipes over the nozzle faces as the frame 18 is driven for movement along the guide rail 20. The wiper member 28 is made of an elastically deformable material, and the frame 18 is vertically adjustable so that the tissue 26 can be urged against the nozzle faces 12 of the print heads 10 with an adjustable pressure P.

The take-up roller 24 is driven for rotation in clock-wise direction, so that the web of tissue 26 is drawn-off from the supply coil 22 and then passes over a top vertex of the wetting roller 30 and then the top vertex of the wiper member 28 before it is wound-up on the take-up coil 24.

A lower part of the wetting roller 30 is immersed in a reservoir 34 that contains a cleaning liquid 36. Thus, as the web of tissue 26 moves over the wetting roller 30, the wetting roller rotates and its peripheral surface becomes wetted with cleaning liquid 36 which will then be transferred onto the dry tissue that is supplied from the supply coil 22. When the tissue has been wetted by the wetting roller 30, it passes over the wiper member 28 which urges the tissue against the nozzle face 12. As the carriage 18 moves, the portion of the tissue 26 that is in contact with the nozzle face 12 to clean the same is constantly replaced by fresh wet tissue supplied from the wetting roller 30, while the used tissue that has become soiled with contaminants from the nozzle faces 12 is wound-up on the take-up coil 24.

Although not shown in the drawing, the wetting roller 30 takes the form of a hollow cylinder having a peripheral wall, e.g. made of aluminum oxide, that is densely covered by a regular array of cavities. The cavities may be formed by through-holes that are shaped as truncated cones opening out to the outer peripheral surface of the wetting roller with their larger circular base surfaces and being open towards the inner peripheral surface of the wall via holes that form the smaller circular base surfaces of the truncated cone.

As is shown in Fig. 1, when the cavities of the wetting roller 30 that have been filled with cleaning liquid emerge from the pool of cleaning liquid 36 in the reservoir 34, they will soon come into contact with the tissue 26 which will thus become soaked with liquid, while the liquid is sucked out of the cavities until these are almost empty. Thus, the total volume of the cavities of the wetting roller 30 will determine the volume V of cleaning liquid 36 that is applied to the tissue per unit area. While the web of tissue 26 travels on towards the wiper member 28, the cleaning liquid will also spread into those portions of the web that had not been in direct contact with the openings of the cavities. Thus, when the web arrives at the wiper member 28, it will be wetted with cleaning liquid essentially uniformly, and, due to the size of the cavities, the amount of wetting will be substantially larger than 50% of the liquid absorption capacity of the tissue.

Fig 2 is a sectional view of a single ejection unit of one of the print heads 10. A body 38 of the print head comprises a wafer 40 and a support member 42 that are bonded to opposite sides of a thin flexible membrane 44. A recess that forms a pressure chamber 46 is formed in the face of the wafer 40 that engages the membrane 44, i.e. the bottom face in Fig. 2. The pressure chamber 46 has an essentially rectangular shape. An end portion on the left side in Fig. 2 is connected to an ink supply line 48 that passes through the wafer 40 in thickness direction of the wafer and serves for supplying liquid ink to the pressure chamber 46. An opposite end of the pressure chamber 46, on the right side in Fig. 2, is connected, through an opening in the membrane 44, to a chamber 50 that is formed in the support member 42 and opens out into the nozzle 14 that is formed in the bottom face of the support member 42. Adjacent to the membrane 44 and separated from the pressure chamber 46, the support member 42 forms another cavity 52 accommodating an acousto-electric (e.g. piezoelectric) transducer 54 that is bonded to the membrane 44.

The piezoelectric transducer 54 has electrodes that are connected to an electronic circuit 56 which controls a voltage to be applied to the actuator. The circuit 56 further includes a detection system 58 for detecting pressure fluctuations in the pressure chamber 46, using the piezoelectric actuator as a pressure sensing element.

When an ink droplet is to be expelled from the nozzle 14, the circuit 56 outputs a voltage pulse to the transducer 54. This voltage pulse causes the transducer to deform in a bending mode. More specifically, the transducer 54 is caused to flex downward, so that the membrane 44 which is bonded to the transducer 54 will also flex downward, thereby to increase the volume of the pressure chamber 46. As a consequence, additional ink will be sucked-in via the supply line 48. Then, when the voltage pulse falls off again, the membrane 44 will flex back into the original state, so that a positive acoustic pressure wave is generated in the liquid ink in the pressure chamber 46. This pressure wave propagates to the nozzle 14 and causes an ink droplet to be expelled.

The acoustic wave that has caused a droplet to be expelled from the nozzle 14 will be reflected (with phase reversal) at the open nozzle and will propagate back into the pressure chamber 46. Consequently, even after the droplet has been expelled, a gradually decaying acoustic pressure wave is still present in the pressure chamber 46, and the corresponding pressure fluctuations exert a bending strain onto the membrane 44 and the actuator 54. This mechanical strain on the piezoelectric transducer leads to a change in the impedance of the transducer, and this change can be measured with the detection system 56. The measured impedance changes represent the pressure fluctuations of the acoustic wave and can therefore be used to derive a time-dependent function P(t) that describes these pressure fluctuations. A P/t-curve representing the function P(t) will be designated as a "decay curve".

Fig. 3 is an enlarged view of the wiper member 28 and the web of tissue 26 that passes over the wiper member and is slightly pressed against the nozzle face 12 of the one of the print heads 10. Fig. 3 also shows a sectional view or a number of nozzles 14 of the print head 10. In the example shown, the line of contact between the nozzle face 12 and the tissue 26 just passes over the orifice of one of the nozzles 14. The wiper member 28 is a roller having longitudinally extending teeth 60 at its outer peripheral surface. Thus, when the tissue 26 passes over the wiper member, it will be locally compressed by the teeth 60, and part of the cleaning liquid will be squeezed out of the compressed portions. The size and spacings of the teeth 60 are such that approximately 50% of the area of the tissue 26 is compressed whereas the other half of the area remains uncompressed. In view of the amount of wetting of the tissue of more than 50%, this means that the compressed portions of the tissue become saturated with liquid, and the non-compressed portions will also become almost saturated by absorbing the liquid that has been displaced from the compressed portions. Further, since the tissue 26 is slightly pressed against the nozzle face 12, the cleaning liquid 36 will be squeezed-out so that a meniscus 62, 64 is formed on both, the upstream side and the downstream side of the line of contact. Since the web of tissue 26 is continuously transported towards the take-up coil 24, there is a continuous transfer of liquid onto the nozzle face 12 until an equilibrium is achieved with the liquid that is re-absorbed into the tissue on the downstream side.

As is shown in Fig. 1, each print head 10 has an ink supply system 66 comprising an ink filter and heating unit 68 and an ink reservoir 70. The ink filter and heating unit 68 is arranged to filter the liquid ink which, in this example, is a UV-curing gelling-type ink, and to supply this ink to the ink reservoir 70 at a specified flow rate and at a specified temperature. The flow rate is controlled such that a fill level 72 of the ink in the ink reservoir 70 is kept essentially constant.

A pressure controller 74 is provided for individually controlling the pressure of the atmosphere above the ink fill level 72 in each ink reservoir 70. As each ink reservoir 70 is connected to the various pressure chambers in the associated print head 10, the pressure in the ink reservoir 70 also determines the pressure of the ink in the pressure chambers 46 and the nozzles 14 in the print head (while the transducer is idle). When the printer is busy with a print operation, the pressure in all ink reservoirs 70 is controlled such that the ink is at a suitable underpressure.

Fig. 3 shows the nozzles 14 in a state in which the actuators 54 are not energized. In this state, each nozzle 14 is initially filled with liquid ink 76. Although the nozzle face 12 is generally facing downwards, the ink 76 does not leak out from the nozzles 14 under the force of gravity because of the underpressure controlled by the pressure controller 74. As a result, the ink 76 which is retained in the nozzle 14 by capillary forces forms a concave meniscus 78 at the nozzle orifice.

Part of the cleaning liquid 36 that is squeezed out of the tissue 26 enters into the nozzle 14 over which the tissue is just passing, displacing a corresponding volume of the ink 76 from that nozzle. Consequently, when a less compressed portion of the tissue 26 passes over the nozzle orifice and tends to re-absorb liquid out of the nozzle, the liquid being absorbed into the tissue will be not the ink 76 but the cleaning liquid 36 that has filled the lower part of the nozzle. This effect can be enhanced by increasing the underpressure in the ink reservoir 70 associated with the printhead 10 during a time period in which the print head is subject to the wiping operation. For that reason, when the wiper member 28 passes over the nozzle face 12 of a specific printhead 10, the pressure controller 74 will increase the underpressure (i.e. reduce the absolute pressure) in this printhead to a value VAC which assures that a substantial part of the nozzles 14 will be filled with cleaning liquid 36. Consequently, the meniscus 78 will be more concave than in the condition when no cleaning operation is performed. Of course, the underpressure VAC is limited to a value that assures that no air will be drawn into the nozzle 14 and further into to the chamber 50. Due to the underpressure, the amount of cleaning liquid 36 entering into the nozzle will be increased, and a certain volume of cleaning liquid 36 will remain in the nozzle 14 even when the line of contact between the tissue 26 and the nozzle face 12 has cleared the nozzle orifice, as has been shown for the leftmost nozzle 14 in Fig. 3.

Since the density and the viscosity of the cleaning liquid 26 differ from the density and viscosity of the ink 76, the proportion between the volumes of cleaning liquid and ink that remain in the nozzles after a cleaning operation has an impact on the decay of pressure waves that are generated by means of the transducers 54. Thus, when a cleaning operation for a particular printhead 10 has been performed, and before the nozzles are purged with ink by spitting out an ink droplet, the parameters of the cleaning operation can be checked by exciting a pressure wave in at least one of the injection units of the printhead and then measuring the decay curve by means of the detection system 58. Of course, the amplitude of the pressure wave should remain below the threshold at which a droplet would be expelled.

Then, it can be decided whether or not the parameters of the cleaning process had been set correctly, for example by comparing the measured decay curve with a previously stored reference curve.

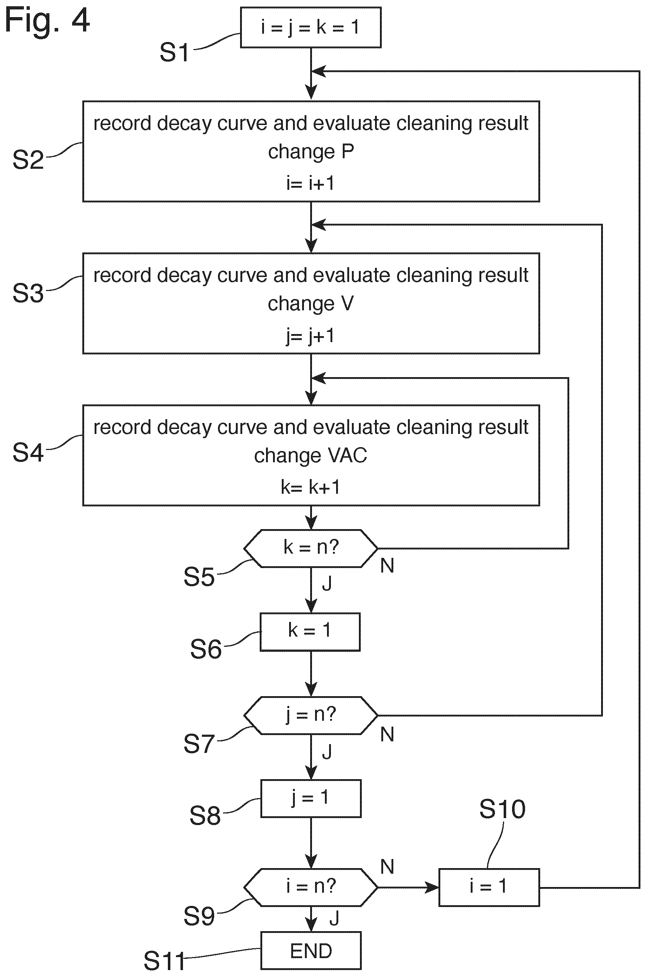

Fig. 4 illustrates an example of a method for recording such reference curves which may then be used for evaluating the quality of the cleaning process.

In step S1, three counters i, j and k are initialized to 1. Then, in step S2, a decay curve is recorded after a cleaning process has been performed with a given set of parameters, and the cleaning result is evaluated by inspecting the nozzle face after cleaning. In the example described here, the relevant parameters of the cleaning process are the pressure P with which the wiper member 28 is pressed against the nozzle face 12, the volume V of cleaning liquid that is applied to the tissue 26 per unit area, and the underpressure VAC that is maintained in the printhead during the cleaning process. In step S2, the pressure P is changed to a different value after the decay curve has been recorded, and then the counter i is incremented by 1.

In step S3, another cleaning process is performed with the changed pressure parameter P, and the resulting decay curve is recorded and the cleaning result is evaluated. Then, the volume-parameter V is changed by a certain amount, e.g. by replacing the wetting roller 30 by another roller that has cavities with different total volume. Further, the counter j is incremented by 1 in step S3.

In a subsequent step S4, another cleaning process is performed, now with the changed volume parameter V, and then the cleaning result is evaluated and the decay curve is recorded. Further, the underpressure-parameter VAC is changed by means of the vacuum controller 74, and the counter k is incremented by 1.

In step S5, it is checked whether the counter k has reached a certain maximum value n. If not (N), the step S4 is repeated. When the maximum value n has been reached (J), the counter k is reset to 1 in step S6 and it is checked in step S7 whether the counter j has reached the maximum value n (or optionally another maximum value different from n). If k < n (N), the process loops back to step S3. Otherwise, the counter j is reset to 1 in step S8. In step S9, it is checked whether the counter i has reached the maximum value n (or a different maximum value). If this is not the case (N), the counter i is reset to 1 (step S10) and the process loops back to step S2. Otherwise, the process ends with step S11.

In each of the steps S2, S3 and S4, the parameters P, V and VAC are respectively set to one of n different values. In this way, a total of n³ reference curves are recorded, one for each parameter combination, and each of these decay curves is labeled by a corresponding quality rating of the cleaning result. This procedure provides not only the reference curves but also helps to find out the optimal combination of parameters.

Then, when the printer has been operating for a while and a cleaning process is performed, a decay curve is measured with the detection circuit 58 and the resulting curve is matched against the n³ reference curves (or at least the reference curve with the highest quality rating), so that it can be decided whether or not the measured curve indicates a sufficiently high quality rating.

## Claims

1. A method of monitoring a cleaning process in an ink jet printer having a nozzle face (12) with a number of nozzles (14) formed therein, each nozzle being associated with an acousto-electric transducer (54) arranged to generate an acoustic pressure wave in a liquid ink for expelling an ink droplet from the nozzle (14), the cleaning process comprising wiping the nozzle face (12) with a wiper (26, 28) that is impregnated with a cleaning liquid (36), **characterized by** a step of using the acousto-electric transducer (54) as a sensor for detecting the presence of cleaning liquid (36) in the nozzles (14).

2. The method according to claim 1, wherein the transducer (54) is used for or detecting the presence of cleaning liquid (36) by recording a decay curve that presents the decay of an acoustic pressure wave that has been created in the ink by energizing the transducer.

3. The method according to claim 2, wherein the decay curve is compared to at least one reference curve that has previously been recorded for a predetermined parameter setting in the cleaning process.

4. The method according to claim 3, wherein the parameter setting includes the setting of a parameter that indicates a pressure (P) with which the wiper (26, 28) is pressed against the nozzle face (12).

5. The method according to claim 3 or 4, wherein the parameter setting includes a parameter that represents a volume (V) of cleaning liquid with which the wiper (26, 28) has been impregnated.

6. The method according to any of the claims 3 to 5, wherein the parameter setting includes a parameter that represents a vacuum pressure (VAC) that is applied to ink (76) in the nozzles (14) during a cleaning process.

7. An ink jet printer configured for carrying out the method according to any of the preceding claims.
